# EUROPEAN PATENT SPECIFICATION

(11) **EP 4 029 181 B1**
(45) Date of publication and mention of the grant of the patent: **07.10.2026**
(21) Application number: 19769090.2
(22) Date of filing: 09.09.2019
(51) Int. Cl.: H04L 5/00

(54) **MONITORING PHYSICAL DOWNLINK CONTROL CHANNEL**
ÜBERWACHUNG EINES PHYSISCHEN DOWNLINK-STEUERKANALS
SURVEILLANCE D'UN CANAL DE CONTRÔLE DE LIAISON DESCENDANTE PHYSIQUE

(43) Date of publication of application: 20.07.2022
(73) Proprietor: Nokia Technologies Oy, 02610 Espoo (FI)
(72) Inventor: TIIROLA, Esa Tapani, 90620 Oulu (FI); HOOLI, Kari Juhani, 90620 Oulu (FI); PAJUKOSKI, Kari Pekka, 90240 Oulu (FI)
(74) Representative: Nokia EPO representatives
(86) International application number: PCT/EP2019/073969
(87) International publication number: WO 2021/047749

(56) References cited:
- WO-A1-2019/099738
- WO-A1-2019/099738
- US-A1- 2019 223 159
- US-A1- 2019 223 159
- INTEL CORPORATION: "On CORESETs and search spaces", vol. RAN WG1, no. Nagoya, Japan; 20170918 - 20170921, 12 September 2017 (2017-09-12), XP051329897, Retrieved from the Internet <URL:http://www.3gpp.org/ftp/tsg_ran/WG1_RL1/TSGR1_AH/NR_AH_1709/Docs/> [retrieved on 20170912]
- INTEL CORPORATION: "On CORESETs and search spaces", vol. RAN WG1, no. Nagoya, Japan; 20170918 - 20170921, 12 September 2017 (2017-09-12), XP051329897, Retrieved from the Internet <URL:http://www.3gpp.org/ftp/tsg_ran/WG1_RL1/TSGR1_AH/NR_AH_1709/Docs/> [retrieved on 20170912]

## Description

### TECHNICAL FIELD

Various example embodiments relate to wireless communications and, particularly, to monitoring physical downlink control channel.

### BACKGROUND

Wireless communication systems are under constant development. An example is taking into use spectrum above 52.6 GHz, such as bands 70/80/92-114 GHz. The spectrum above 52.6 GHz has different properties than spectrum up to 52.6 GHz, which need to be taken into account, for example in monitoring physical downlink control channel.

WO 2019/099738 A1 discloses that search space sets are defined, which periodically monitor the beginning of every Nth slot. User devices always monitor certain slots at predefined intervals.

US 2019/223159 discloses having predefined periodicities for data transmission on the PDCCH.

3GPP draft; R1-1716306 discloses relationships between CORESETs and search spaces specific to each UE and proposes various search space designs.

### BRIEF DESCRIPTION

The scope of protection sought for various embodiments of the invention is set out by the claims.

### BRIEF DESCRIPTION OF DRAWINGS

Embodiments are described below, by way of example only, with reference to the accompanying drawings, in which
Figure 1 illustrates an exemplified wireless communication system;
Figures 2 to 4 illustrates examples of configurations;
Figures 5 to 9 illustrate exemplified processes; and
Figures 10 and 11 are schematic block diagrams.

### DETAILED DESCRIPTION OF SOME EMBODIMENTS

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Embodiments and examples described herein may be implemented in any communications system comprising wireless connection(s). In the following, different exemplifying embodiments will be described using, as an example of an access architecture to which the embodiments may be applied, a radio access architecture based on new radio (NR, 5G) or long term evolution advanced (LTE Advanced, LTE-A), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), beyond 5G, wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

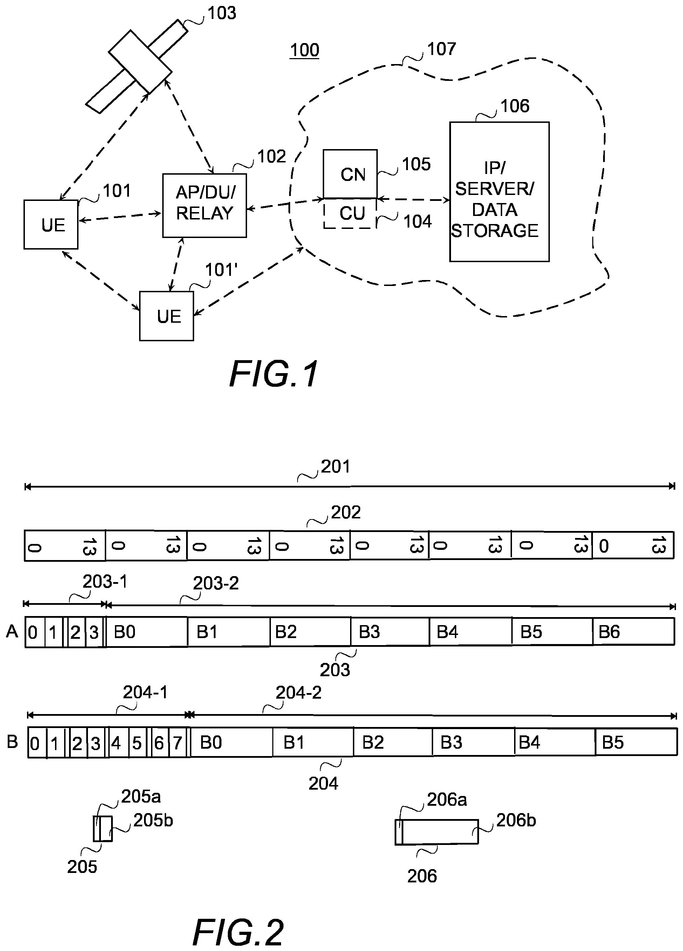

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows user devices 101 and 101' configured to be in a wireless connection on one or more communication channels in a cell with an access node (such as (e/g)NodeB) 102 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point (AP) etc. entity suitable for such a usage.

A communications system 100 typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 105 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of wireless devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device may also utilise cloud. In some applications, a user device may comprise a small portable device with radio parts (such as a watch, earphones or eyeglasses) and the computation is carried out in the cloud. The user device (or in some embodiments a relay node, such as a mobile termination (MT) part of the integrated access and backhaul (IAB) Node), is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors micro-controllers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 1) may be implemented.

5G enables using multiple input - multiple output (MIMO) antennas, many more base stations or nodes or corresponding network devices than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 106, or utilise services provided by them. The communication network may also be able to support the usage of cloud services, for example at least part of core network operations may be carried out as a cloud service (this is depicted in Figure 1 by "cloud" 107). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 102) and non-real time functions being carried out in a centralized manner (in a centralized unit, CU 104).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 103 in the mega-constellation may cover several satellite-enabled network entities that create on-ground cells. The on-ground cells may be created through an on-ground relay node 102 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as relay nodes, for example distributed unit (DU) parts of one or more IAB nodes, or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

The new radio up to 52.6 GHz supports bandwidth part (BWP) size of up to 275 physical resource blocks (PRBs). This means that the maximum size is 792 MHz (12 subcarriers/PRB x 275 PRBs x 240 kHz/subcarrier). In systems, for the new radio, or beyond 5G, supporting spectrum above 52.6 GHz, such as bands 70/80/92-114 GHz, channel bandwidth may be much more higher, for example as high as 10 GHz. Additionally, phase noise will also increase. To overcome the phase noise and to provide higher bandwidths, subcarrier spacing has to be increased. This means that subcarrier spacings above 240 kHz should be supported. However, based on scaling of the new radio up to 52.6 GHz, physical downlink control channel monitoring increases power consumption in user devices when subcarrier spacing increases and the scheduling flexibility of user devices is not limited. One way to minimize the power consumption is to use physical downlink control channel configurations that minimize the power consumptions required by the monitoring in the user devices.

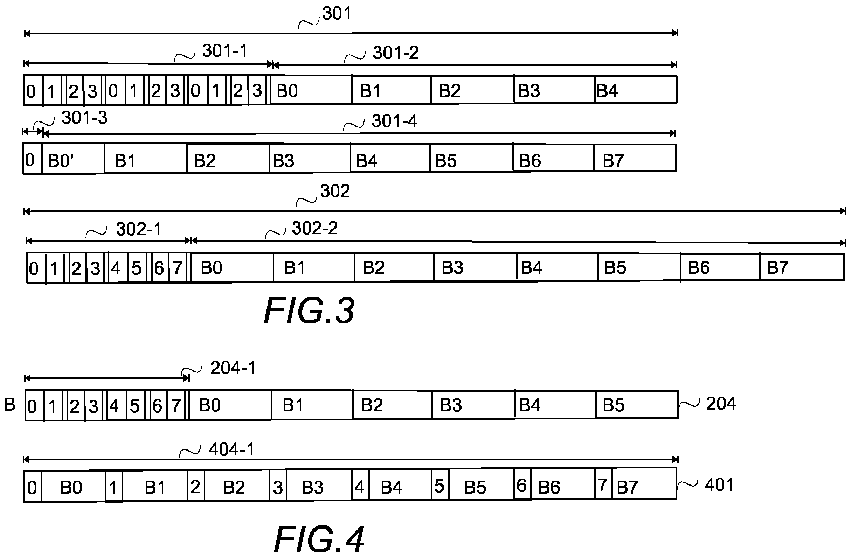

Figures 2 and 3 illustrate examples for such configurations for physical downlink control channel. The disclosed principles for configurations support subcarrier spacing 240 kHZ and subcarrier spacings above 240 kHz, such as 480 kHz (=2⁵x15 kHz), 960 kHz (=2⁶x15 kHz), and other 2^{µ}x15 kHz, µ being a parameter called a transmission numerology, µ ≥4 are candidate values for above 52.6 GHz, but they may be used with any subcarrier spacings. The illustrated physical downlink control channel configurations, or shortly configurations, do not change the concepts of control resource sets and associated search spaces but introduce a new parameter and places for the control resource sets using different principle than what is used with the new radio up to 52.6 GHz, as explained below. As is known, a control resource set defines frequency and time-domain resources for a physical downlink control channel and a search space defines, which downlink control information (DCI) formats a user device monitors, and when. Furthermore, each search space is associated with one control resource set, and several search spaces may be associated with one control resource set. In other words, a search space defines monitoring occasions within a control resource set the search space is associated with. A frequency and time-domain resource, defined in a control resource set, defines orthogonal frequency division multiplex (OFDM)/ single carrier frequency division multiplex (SC-FDM) symbols and physical resource blocks (PRBs), which are available for one or more search spaces associated with the control resource set.

Figure 2 illustrates example configurations that use a structure with 8 slots, i.e. 0.125 ms with 960 kHz subcarrier spacing. Figure 2 further illustrates how the example configurations map to a slot grid. It should be appreciated that the principles disclosed in Figure 2 can be implemented to any other amount of slots as well, depicted by an example in Figure 3. The advantage of the disclosed examples in Figure 2 include that they provide 1/8^{th} physical downlink control channel monitoring frequency in time domain. Further, the disclosed examples maintain commonality with the radio frame structure defined for new radio up to 52.6 GHz.

Referring to Figure 2, the new parameter, which is a minimum monitoring period 201, called herein a period A, comprises a plurality of slots over a slot grid 202. The period A is used in different configurations 203, 204 to define a minimum physical downlink control channel monitoring period. Further, the period A is divided in time to two parts: a beginning part followed by a part called herein a minimum scheduling unit. The beginning part comprises one or more slots, which is/are at least partially reserved for (occupied by) a control resource set. At least partially means that the control resource set may occupy only part of the resources, i.e. one or more symbols, in one slot, thereby allowing physical downlink shared channel data to be transmitted in the beginning part in the resources (symbols) not occupied by the control resource set. The minimum scheduling unit in time comprises in the period A the remaining one or more slots, wherefrom no resources are reserved for the control resource set, the slots in the minimum scheduling unit being for data transport.

The minimum physical downlink control channel monitoring period 201, i.e. the period A, is same for both configurations in Figure 2. Control resource sets 203-1, 204-1 are defined by means of control channel elements (CCEs) 205, denoted in configurations 203, 204 by running numbers. More precisely, control channel elements 0 to 3 form a control resource set 203-1 and control channel elements 0 to 7 form a control resource set 203-2.

The minimum scheduling unit 203-2, 204-2 in time is defined by means of "transport elements" 206, which are in the period A slots that are not reserved for control channel elements, denoted in configurations 203, 204 by letter B and a running number.

In the illustrated example of Figure 2, a control channel element 205 comprises a physical downlink control channel demodulation reference signal (PDCCH DMRS) 205a and a physical downlink control channel downlink control information (PDCCH DCI) 205b. A "transport element" 206, i.e. a slot not reserved for control channel elements (control resource sets), comprises a demodulation reference signal (DMRS) 206a and a channel 206 b. The channel 206b is a physical downlink shared channel (PDSCH), a physical uplink shared channel (PUSCH), or a physical uplink control channel (PUCCH). It should be appreciated that the illustrated structures of the elements disclose only one example how the content may be arranged in an element, and any other way to arrange the content may be used. For example, the demodulation reference signal (DMRS) 206a may locate in the middle of the channel 206b.

As can be seen from the examples, the control channel elements 0 to 3, or 0 to 7 locate at the beginning of the period A. In other words, a control resource set locates at the beginning of the period A, and associated one or more search spaces with corresponding monitoring occasions locate at the beginning of every X^{th} period A. In other words, the search space definitions define a monitoring occasion periodicity, i.e. monitoring occasions with reference to the period A. For example, a monitoring occasion may occur in each period A, or in every second period A, or in every third period A, or every fourth period A, etc., depending on the search space definitions. This will enable smooth pipeline processing for user devices. Furthermore, this will minimize unnecessary buffering of fast fourier transform (FFT) samples at the user devices.

Both of the illustrated configurations 203, 204 associate the physical downlink control channel configuration with the number of slots (transport elements) B0 to B6 or B0 to B5 per spatial layer per scheduling unit in time. This balances the physical downlink control channel coverage with the physical downlink shared channel coverage, the physical uplink shared channel coverage and physical uplink control channel coverage.

A single downlink control information message is used to indicate scheduling information to a user device. Mapping of transport blocks to transport elements may follow information given in a control resource set, detected during monitoring, or the mapping of the transport blocks may follow a predefined mapping. The mapping will be described in more detail below.

The physical downlink control channel configuration 203 is for a control resource set A. The control resource set A 203 is, with its search space(s), associated with a single transport block per spatial layer per slot, without transport block repetition. In other words, the associated slots B0, B1, B2, B3, B4, B5, B6 in the physical downlink control channel configuration 203 for the control resource set A do not repeat content or transport block in another slot and they may be freely scheduled. Such a single slot per transport block scheduling, in which a transport block is transmitted only within one slot, may be implemented by mapping single transport blocks to single slots and/or by mapping multiple transport blocks to multiple slots, and each transport block is transmitted in a single slot. For example, control channel element 0 may schedule transport block to slot B0 for a first user device, and control channel element 1 may schedule transport block to slot B1 for a second user device. Hence, the physical downlink control channel configuration 203 provides an example of a single transport block scheduling in which each physical downlink control channel schedules one slot and one transmission block. Scheduling delay for different slots may be indicated using the existing cross-slot scheduling framework for spectrum up to 52.6 GHz, and especially the parameter slot offset in the cross-slot scheduling framework. (The parameter slot offset may be noted as K₀ for PDSCH, K₂ for PUSCH and K₁ for PUCCH). As another example, control channel elements 0 and 1 may schedule transport blocks to slots B0, B1, B2, B3 and B4 for a first user device and control channel element 3 may schedule transport blocks to slots B5 and B6 for a second user device. In other words, the control resource set A provides an example of a multi-transport block scheduling, in which multiple transport blocks are mapped to multiple slots, wherein each transport block is transmitted in a single slot. The multi-transport block scheduling allows to minimize the length of the control resource set as a smaller amount of downlink control information needs to be signaled. Thanks to be able to schedule multiple transport blocks and slots to a user device with a single downlink control information message instead of a separate downlink control information message for each transport block and slot, repetition of some fields common for all downlink control information messages, for example an identifier of the user device and cyclic redundancy check, are avoided. This reduces the length of control resource set and the overall amount of associated downlink control information, and thereby physical downlink control channel overhead. As an example, a user device may be configured, as a predefined mapping, that the control resource set A means either single transport scheduling or multi-transport scheduling, which is signaled over the control resource set A.

The physical downlink control channel configuration 204 is for a control resource set B. The control resource set B 204 is, with its search space(s), associated with transport block repetition over multiple slots, in which a single transport block per spatial layer is mapped to multiple slots. In other words, the control channel elements 0 to 7 schedule the slots B0, B1, B2, B3, B4, B5 to transmit the same transport block (from/to the same user device). It should be appreciated that even in the repetitive transport block scheduling the slots B0 to B5 may contain at least partially different encoded bits of the same transport block. For example, different redundancy versions of the same transport block may be transmitted on the different slots B0 to B5. Alternatively, the slots B0 to B5 may contain different number of resource elements available for transport block transmission. Correspondingly, different rate matching or puncturing may be applied in different slots B0 to B5, resulting that at least partially different encoded bits of the same transport block are transmitted in different slots.

The illustrated configurations 203, 204 in Figure 2 are aligned at least in time domain, have the same demodulation reference signal sequence and the same precoder granularity, and the control resource sets overlap at least partially. When a user device is configured with the illustrated two configurations, or with two or more configurations overlapping correspondingly, the user device uses the same channel estimates or the same demodulation reference signal sequence when performing the physical downlink control channel monitoring from the two or more search spaces. This minimizes channel estimation burden at the user device. For configurations that are not overlapping, the user device may use the same demodulation reference signal sequence.

Referring to Figure 3, further examples of possible configurations are illustrated. Two of the configurations have the same period A 301 than the examples in Figure 2. One of the configurations has a longer control resource set 301-1 and a shorter minimum scheduling unit 301-2 in time than in the examples in Fig- ure 2, whereas the other one illustrates that a control resource set 301-3 may occupy a slot only partially, in which case the first transport element B0' has less resources in time domain than the consecutive transport elements B1 to B7 and that the minimum scheduling unit 301-4 may also comprise in time domain a portion of a slot. One of the configurations has a longer period A 302 than any other illustrated example, with the same control resource set 302-1 as the configuration 204 in Figure 2, and a longer minimum scheduling unit 302-2 in time than in any other illustrated example. The scheduling may follow a single slot per transport block scheduling principle described above with the control resource set A (configuration 203 in Figure 2)or a repetitive transport block scheduling principle described above with the control resource set B (configuration 204 in Figure 2), or may be a mixed block scheduling, in which a part of the slots may be scheduled using the repetitive transport block scheduling principle, and others using the single slot per transport block scheduling principle. For example, slots B0-B3 may be scheduled for transmission of the same transport block from/to the same user device and slots B4-B7 may be scheduled for transmission of different transport blocks, from/to user device(s).

Based on the examples, it is evident that the period A (the minimum monitoring period), as well as the number of control channel elements forming a control resource set, and an aggregation level, may each be determined as an independent parameter, whereas the transport block mapping is either predefined or defined with the control resource set. A predefined transport block mapping may follow a preset rule. For example, a rule may be that if, in the time domain, the length of symbols occupied by a control resource set equals to a specific portion of the period A, the mapping follows the repetitive transport block scheduling principle. The specific portion may be given as a parameter and it may be called a size of a control resource set (for the single slot per transport block scheduling principle, or for the repetitive transport block scheduling principle). Another rule may be that if, in the time domain, the length of symbols occupied by a control resource set is less than the specific portion of the period A, the mapping follows the single slot per transport block scheduling principle. The specific portion may be, for example, one fourth of the period A, illustrated by 204-1 in Figure 2. Yet another rule may be that when a user device is configured with two or more different configurations, the mapping of the configuration, which has in the time domain the largest control resource set, follows the repetitive transport block scheduling principle. In other words, the mapping is based on the size of the control resource set. Another rule may be that when a user device is configured with two or more different configurations, the mapping of the configuration, which has in the time domain the smallest control resource set, follows the single slot per transport block scheduling principle. In other words, the mapping is based on the size of the control resource set and information received in monitored symbols, for example indicated by downlink control information. As is evident from the non-limiting examples of rules, a mapping rule depending at least partially on one or more control resource sets may be defined and applied. It should be appreciated that further parameters and/or parameter values than those disclosed above may be provided, for example a parameter for a configurable physical downlink control channel duration, to convey information on the configuration, or relating to the configuration.

The different control resource sets in the configurations illustrated in Figures 2 and 3, and in other corresponding configurations may, or may not, be separated in the frequency domain. When separated in the frequency domain, the physical downlink control channel downlink control information (PDCCH DCI) 205b in different configurations are transmitted from different transmission and reception points (TRPs), or from the same transmission and reception point, depending on the technical implementation of the transmission and reception point(s). When multiple transmission and reception points are used, physical downlink control channels from different transmission and reception points may be transmitted to a user device in parallel. This in turn increases pipeline processing capabilities.

Figure 4 illustrates a difference between the configuration 204 with control resource set B 204 illustrated in Figure 2, and a configuration 401 with a control resource set having the same number of control channel elements. However, in the configuration 401, the control resource set is placed using for solutions above 52.6 GHz (to maintain physical downlink control channel coverage above 52.6 GHz) the same principles in scaling as are used in the new radio up to 52.6 GHz to support different subcarrier spacing values. As can be seen, the control resource set 404-1 in the configuration 401 is spread to each slot, which means that physical downlink control channel monitoring should be performed at the beginning of each slot, i.e. more frequently in time than in the configuration 204 (monitoring at the beginning of each X^{th} period A). The more frequently in time the monitoring is performed, the higher is power consumption in the user device and the more data needs to be buffered. Furthermore, the configuration 401 has no slot in which no resources (no symbols) are reserved for a control resource set, whereas the control resource set B 204 has six such slots. In other words, the minimum scheduling unit in the configuration 401 is less than a slot, whereas in the control resource set B 204 the minimum scheduling unit is six slots.

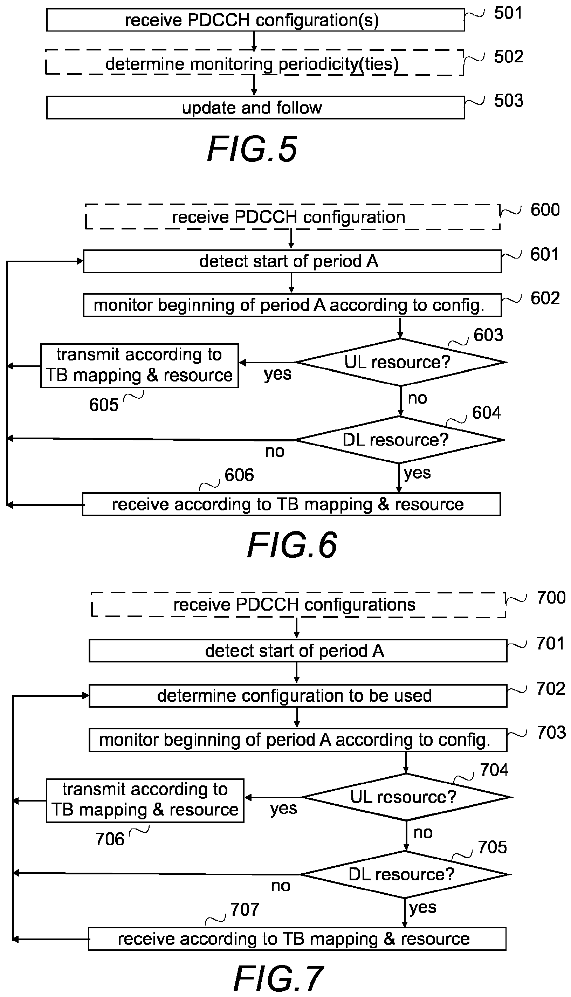

Figures 5 to 7 illustrate different functionality of a user device. The user device may be configured to implement the functionality for frequencies above 52.6 GHz. Figure 5 describes how the user device is configured with one or more physical downlink configurations. Figure 6 illustrates an example in which the user device comprises one configuration, for example one of the configurations 203 and 204 illustrated in Figure 2, (or configurations having different period As, not aligned in time), and Figure 7 an example in which the user device comprises two or more configurations, which have the same period A and are aligned in time domain, for example both configurations 203 and 204 illustrated in Figure 2.

Referring to Figure 5, the user device receives at block 501 a physical downlink control channel (PDCCH) configuration. The configuration may be a common configuration received during initial access, or a dedicated configuration received when the user device enters a radio resource control (RRC) connected state, or an update to a configuration received earlier. In the dedicated configuration one or more dedicated search spaces, associated with a control resource set, that may be the same or different than in the common configuration, are defined for the user device.

In response to receiving the configuration, the user device determines in block 502 a monitoring periodicity, which is N times period A, wherein N is a positive integer, indicated by occurrence periodicity in the search space definitions. (As described above with Figure 2, the search space definitions define one or more monitoring occasions with the corresponding occurrence periodicity.) In other words, N may be 1, 2, 3, etc. By determining a monitoring periodicity with a period, which may be longer than the minimum monitoring period, the monitoring may take place less frequently in time domain, thereby saving power resources of the user device. However, it should be appreciated that block 502 may be omitted in implementations in which the monitoring occurrence periodicity is always the same as the periodicity of the period A. The block 502 may be omitted also in implementations in which the monitoring periodicity will be the same as the periodicity of the period A regardless of the occurrence periodicity.

Then the user device updates at block 503 its physical downlink control channel configuration to be the received configuration and follows the recent received configuration.

Naturally, if an embodiment supports that the user device maintains information on two or more physical downlink control channel configurations, one or more of them may be received at block 501, and updated at block 502 correspondingly.

Referring to Figure 6, the user device has received at block 600 a physical downlink control channel (PDCCH) configuration. (The user device performs in block 600 a process described above with Figure 5.)

When start of the period A is detected in block 601, the user device monitors in block 602 the beginning of the period according to the received physical downlink control channel configuration. For example, if the monitoring periodicity is the period A, the user device monitors monitoring occasions in the first slot(s), to detect whether the downlink control information schedules an uplink (UL) resource (block 603) or a downlink (DL) resource (block 604) to the user device. If the monitoring periodicity is an X^{th} multiple of the period A, x being 2, 3, 4, etc., the user device monitors monitoring occasions in the first slot(s), of every X^{th} period A to detect whether the downlink control information schedules an uplink (UL) resource (block 603) or a downlink (DL) resource (block 604) to the user device.

If an uplink resource is scheduled (block 603: yes), the user device transmits in block 605 data according to the transport block mapping in the physical downlink control channel configuration and the resource indicated in the downlink control information. For example, if the configuration 204 in Figure 2 is used, the slots B0 to B5 each comprise the same piece of data. If the configuration 203 in Figure 2 is used, it depends on the resource allocated, which slots, or a slot, are used for transmitting, but the slots contain different pieces of data.

If a downlink resource is scheduled (block 604: yes), the user device receives in block 606 data according to the transport block mapping in the physical downlink control channel configuration and the resource indicated in the downlink control information. For example, if the configuration 204 in Figure 2 is used, the user device receives in slots B0 to B5 the same piece of data. If the configuration 203 in Figure 2 is used, it depends on the resource allocated, which slots, or a slot, are used for receiving data, but the slots contain different pieces of data.

If no uplink resource (block 603: no) and no downlink resource (block 604: no), the user device waits until it detects, again, in block 601, start of the period A.

If the user device is configured to monitor physical downlink control channel according to two or more configurations in parallel, the user device performs in parallel the functionality described above for each such configuration.

Referring to Figure 7, the user device has received at block 700 two or more physical downlink control channel (PDCCH) configurations, for example to be used for frequencies above 52.6 GHz. (The user device performs in block 700 a process described above with Figure 5.) Further, it is assumed that the configurations have the same period A and are aligned in time domain.

When start of the period A is detected in block 701, the user device determiners in block 702 which one of the two or more physical downlink control channel (PDCCH) configurations is to be used, or is both to be used. The decision may be based on aggregation level known by the user device. For example, if the aggregation level is 4, the user device may use configuration 203, and if the aggregation level is 8, the user device may use configuration 204.The user device monitors in block 703 corresponding monitoring occasions at the beginning of the period according to the determined physical downlink control channel configuration(s). For example, if the monitoring periodicity is the period A, and the determined configuration is the configuration 203, the user device monitors monitoring occasions in the first slot(s) to detect whether the downlink control information schedules an uplink (UL) resource (block 704) or a downlink (DL) resource (block 705) to the user device. If the monitoring periodicity is an x^{th} multiple of the period A, x being 2, 3, 4, etc., and the determined configuration is the configuration 203, the user device monitors monitoring occasions in the firstslot(s) of every x^{th} period A to detect whether the downlink control information schedules an uplink (UL) resource (block 704) or a downlink (DL) resource (block 705) to the user device. If the monitoring periodicity is the x^{th} multiple of the period A, and the determined configuration is the configuration 204, the user device monitors monitoring occasions in the two first slots of every x^{th} period A to detect whether the downlink control information schedules an uplink (UL) resource (block 704) or a downlink (DL) resource (block 705) to the user device. If the monitoring periodicity is the period A, and the determined configuration is the configuration 204, the user device monitors monitoring occasions in the first two slots of each period A to detect whether the downlink control information schedules an uplink (UL) resource (block 704) or a downlink (DL) resource (block 705) to the user device.

If an uplink resource is scheduled (block 704: yes), the user device transmits in block 706 data according to the transport block mapping in the physical downlink control channel configuration and the resource indicated in the downlink control information. For example, if the configuration 204 in Figure 2 is used, the slots B0 to B5 each comprise the same piece of data. If the configuration 203 in Figure 2 is used, it depends on the resource allocated, which slots, or a slot, are used for transmitting, but the slots contain different pieces of data.

If a downlink resource is scheduled (block 705: yes), the user device receives in block 707 data according to the transport block mapping in the physical downlink control channel configuration and the resource indicated in the downlink control information. For example, if the configuration 204 in Figure 2 is used, the user device receives in slots B0 to B5 the same piece of data. If the configuration 203 in Figure 2 is used, it depends on the resource allocated, which slots, or a slot, are used for receiving data, but the blocks contain different pieces of data.

If no uplink resource (block 704: no) and no downlink resource (block 705: no), the user device waits until it detects, again, in block 701, start of the period A.

User devices are configured with physical downlink control channel configurations by a base station, usually called gNB in the new radio, or by a corresponding network node.

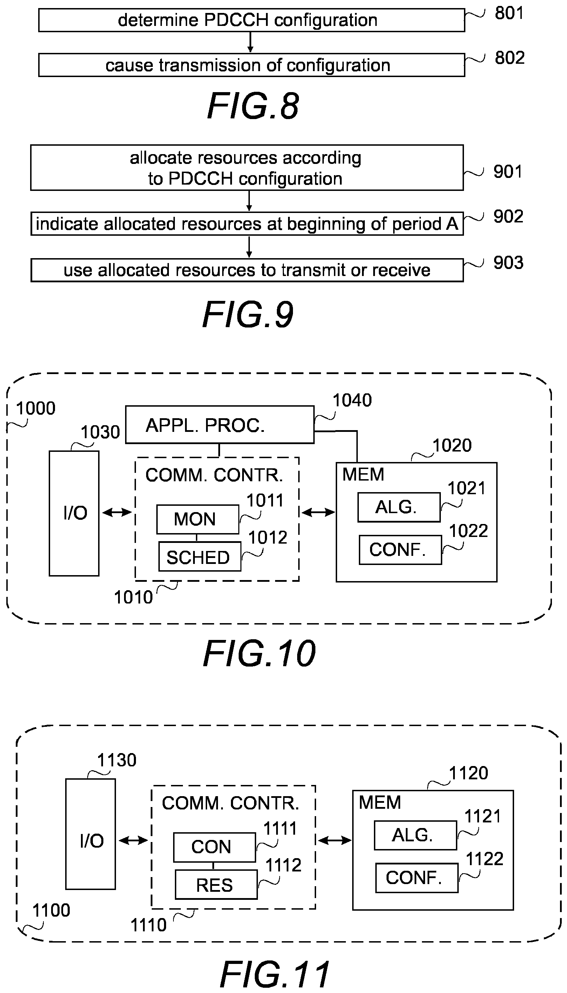

Referring to Figure 8, the base station determines in block 801 a physical downlink control channel configuration. The configuration may be a common configuration or a user device -specific configuration. Further, the base station may be configured to take into account an aggregation level and/or a beam form when determining the physical downlink control channel.

The aggregation level indicates how many control resource elements are used for transmitting one downlink control information. For example, using the configurations in Figure 2, the configuration 203 may be used for aggregation levels up to and including four and the configuration 204 may be used for aggregation level 8.

As to the beam form, a wider a beam is, the more efficient beam sweeping over a cell area is achieved, at least in terms of time resources used, for example. However, a wider beam has a lower signal to noise relation caused by a lower beam gain. The lower signal to noise relation may be compensated using a higher aggregation level and a repetition of physical downlink control channel, provided by the configuration 204 (control resource set B) in Figure 2. The base station may have been configured to use for the common control resource set, to schedule and transmit remaining minimum system information (RMSI), a wide beam and the control resource set B, and for user device -specific control resource sets a narrow beam and control resource sets A. (Use of the wide beam means that the number of beams to cover a cell area is smaller, and hence RMSI, required for initial access by all served user devices, can be transmitted in a faster manner, compared to the use of a narrow beam.) In another example, using the configurations in Figure 2, the base station may be configured to use the configuration 203 with a beam with a width below a threshold, and the configuration 204 with a beam with a width above the threshold.

Once the configuration has been determined, transmission of the configuration is caused in block 802 to configure at least one user device (wireless device) for periodic downlink control channel monitoring in a cell provided by the base station.

The configuration used also affects to resource allocation. In the example of Figure 9, a concept called a maximum scheduling unit is used. It comprises the slots, or partial slots, in the minimum scheduling unit and in the one or more slots having symbols occupied by a control resource set, those symbols that are not occupied by the control resource set and/or by physical downlink control channel(s) transmitted by the base station.

Referring to Figure 9, the base station allocates in block 901 resources for uplink and/or downlink data according to the configuration, i.e. from the maximum scheduling unit defined by the configuration, using the principles disclosed above with Figure 2, and indicates in block 902 allocated resources at the beginning of the period A, which comprises the allocated resources. Naturally the base station uses in block 903 the allocated resources to transmit or receive data.

The blocks, related functions, and information exchanges described above by means of Figures 2 to 9 are in no absolute chronological order, and some of them may be performed simultaneously or in an order differing from the given one. Other functions can also be executed between them or within them, and other information may be transmitted, and/or other rules applied. Some of the blocks or part of the blocks or one or more pieces of information can also be left out or replaced by a corresponding block or part of the block or one or more pieces of information.

Figures 10 and 11 illustrate apparatuses comprising a communication controller 1010, 1110 such as at least one processor or processing circuitry, and at least one memory 1020, 1120 including a computer program code (software, algorithm) ALG. 1021, 1121, wherein the at least one memory and the computer program code (software, algorithm) are configured, with the at least one processor, to cause the respective apparatus to carry out any one of the embodiments, examples and implementations described above. Figure 10 illustrates an apparatus for the user device, and Figure 11 illustrates an apparatus for the network node (base station). The apparatuses of Figures 10 and 11 may be electronic devices.

Referring to Figures 10 and 11, the memory 1020, 1120 may be implemented using any suitable data storage technology, such as semiconductor based memory devices, flash memory, magnetic memory devices and systems, optical memory devices and systems, fixed memory and removable memory. The memory may comprise a configuration storage CONF. 1021, 1121, such as a configuration database, for at least storing one or more configurations and/or corresponding parameters/parameter values for physical downlink control channel monitoring and/or predefined transport block mapping(s). The memory 1020, 1120 may further store a data buffer for data waiting to be processed (including transmission).

Referring to Figure 10, the apparatus 1000 may further comprise a communication interface 1030 comprising hardware and/or software for realizing communication connectivity according to one or more radio communication protocols. The communication interface 1030 may provide the apparatus with radio communication capabilities with one or more base stations (access nodes) of a wireless network. In an embodiment/example/implementation, the communication interface 1030 comprises one or more antenna arrays providing the apparatus with capability of forming directive transmission radio beams and the reception radio beams above 52.6 GHz. The communication interface may comprise standard well-known analog radio components such as an amplifier, filter, frequency-converter and circuitries, conversion circuitries transforming signals between analog and digital domains, and one or more antennas. Digital signal processing regarding transmission and reception of signals may be performed in a communication controller 1010.

The apparatus 1000 may further comprise an application processor 1040 executing one or more computer program applications that generate a need to transmit and/or receive data through the base stations. The application processor may form an application layer of the apparatus. The application processor may execute computer programs forming the primary function of the apparatus. For example, if the apparatus is a sensor device, the application processor may execute one or more signal processing applications processing measurement data acquired from one or more sensor heads. If the apparatus is a computer system of a vehicle, the application processor may execute a media application and/or an autonomous driving and navigation application.

The communication controller 1010 may comprise a monitoring circuitry MON 1011 configured to perform physical downlink control channel monitoring of the apparatus according to any one of the embodiments/examples/implementations described above. The communication controller 1010 may further comprise a scheduling circuitry SCHED 1012 configured to detect resources allocated to the apparatus for transmitting or receiving data and to perform mapping accordingly. The communication controller 1010 may control the monitoring circuitry 1011 to receive configurations, to store them, to detect start of monitoring occasions and the scheduling circuitry 1012 to transmit or receive. The scheduling circuitry 1012 may control the communication interface 1030 to transmit or receive data.

Referring to Figure 11, the apparatus for the base station comprises a communication interface 1130 comprising hardware and/or software for realizing communication connectivity according to one or more radio communication protocols. The communication interface 1130 may provide the apparatus with communication capabilities to user devices (terminal devices) camping in one or more cells controlled by the base station. In an embodiment, the communication interface may comprise one or more antenna arrays providing the apparatus with capability of forming directive transmission radio beams and the reception radio beams above 52.6 GHz. The communication interface may comprise standard well-known components such as an amplifier, filter, frequency-converter, (de)modulator, and encoder/decoder circuitries and one or more antennas.

The communication controller 1110 comprises a radio controller circuitry CON 1111 configured to control functions of terminal device(s) connected to the access node. The radio controller circuitry may, for example, configure the terminal device to perform monitoring of the physical downlink control channel according to any one of the embodiments/examples/implementations described above. Upon receiving resource request for data to/from the user device, a resource allocating circuitry RES 1112 may be triggered. The radio controller circuitry 1111 may communicate the reserved resources to the user device through the communication interface 1130.

In an embodiment, at least some of the functionalities of the apparatus of Figure 11 may be shared between two physically separate devices, forming one operational entity. Therefore, the apparatus may be seen to depict the operational entity comprising one or more physically separate devices for executing at least some of the processes described with respect to the base station.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with Figures 2 to 9 may be carried out by an apparatus comprising corresponding means for carrying out at least some of the described processes. The apparatus may comprise separate means for separate phases of a process, or means may perform several phases or the whole process. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments/examples/implementations described herein.

According to yet another embodiment, the apparatus carrying out the embodiments comprises a circuitry including at least one processor and at least one memory including computer program code. When activated, the circuitry causes the apparatus to perform at least some of the functionalities according to any one of the embodiments/examples/implementations of Figures 2 to 9, or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems (apparatuses) described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments/examples/implementations as described may also be carried out in the form of a computer process defined by a computer program or portions thereof. Embodiments of the methods described in connection with Fig-ures 4 to 9 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium, for example. Coding of software for carrying out the embodiments as shown and described is well within the scope of a person of ordinary skill in the art. In an embodiment, a computer-readable medium comprises said computer program.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A user device, comprising means for performing:
receiving from a network node a first configuration (203) for physical downlink control channel monitoring, the first configuration (203) defining a first minimum monitoring period (201), which comprises a plurality of slots, a first control resource set (203-1) occupying one or more symbols in one or more slots at the beginning of the first minimum monitoring period (201), and one or more search spaces associated with the first control resource set (203-1);
performing downlink control channel monitoring periodically with a first monitoring periodicity, which is N times the first minimum monitoring period (201), wherein N is a positive integer, by monitoring according to the received first configuration (203) the one or more symbols in the one or more slots at the beginning of a first monitoring period;
receiving a second configuration (204) for physical downlink control channel monitoring, the second configuration (204) defining a second minimum monitoring period (301), which comprises a plurality of slots, a second control resource set (204-1) occupying one or more symbols in one or more slots at the beginning of the second minimum monitoring period (301), and one or more search spaces associated with the second control resource set (204-1); and
performing downlink control channel monitoring periodically with a second monitoring periodicity, which is M times the second minimum monitoring period (301), wherein M is a positive integer, by monitoring according to the received second configuration (204) the one or more symbols in the one or more slots at the beginning of a second monitoring period, wherein the first control resource set (203-1) and the second control resource set (204-1)overlap at least partially in time and the means are further configured to perform the downlink control channel monitoring with the first and second monitoring periodicities and using same channel estimates or a same demodulation reference signal sequence, and wherein a search space defines one or more monitoring occasions with occurrence periodicity with respect to the corresponding minimum monitoring period (201, 301) and the occurrence periodicity defines how many minimum monitoring periods (201, 301) the corresponding monitoring period comprises.

2. A user device according to claim 1, wherein the second minimum monitoring period (301) comprises the same amount of slots as the first minimum monitoring period (201).

3. A user device according to claim 1 or 2, wherein the first control resource set (203-1) occupies a different number of symbols than the second control resource set (204-1).

4. A user device according to any of claims 1 to 3, wherein the means are further configured to perform the downlink control channel monitoring with the second monitoring periodicity using a same demodulation reference signal sequence, which is used for the downlink control channel monitoring with the first monitoring periodicity.

5. A user device according to any preceding claim, wherein the means are further configured to perform:
detecting in the one or more symbols monitored a resource allocated to the user device, the resource comprising one or more symbols within the corresponding minimum monitoring period (201);
receiving, in response to the resource allocated being a downlink resource, data in the resource; and
transmitting, in response to the resource allocated being an uplink resource, data in the resource.

6. A user device according to claim 5, wherein the means are further configured to perform data mapping to the resource based on information received in the one or more symbols monitored, and based on the size of the corresponding control resource set (203-1, 204-1).

7. A user device according to any preceding claim, wherein, in the received configuration the one or more slots at the beginning of the corresponding minimum monitoring period (201, 301) are followed by one or more slots not occupied by the control resource set in the corresponding minimum monitoring period (201, 301).

8. A network node, comprising means for performing:
determining a first configuration (203) for physical downlink control channel monitoring, the first configuration defining a first minimum monitoring period (201), which comprises a plurality of slots, a first control resource set (203-1) occupying one or more symbols in one or more slots at the beginning of the first minimum monitoring period (201), and one or more search spaces associated with the control resource set (203-1);
transmitting the first configuration in a cell provided by the network node to configure at least one wireless device in the cell for periodic downlink control channel monitoring with a first monitoring periodicity, which is N times the first minimum monitoring period, wherein N is a positive integer;
scheduling transmissions by allocating resources within the first minimum monitoring period at least from one or more slots not having symbols occupied by the first control resource set (203-1);
transmitting, according to the first configuration (203), within the one or more symbols, information indicating the resources;
determining at least one second configuration (204) for physical downlink control channel monitoring, the second configuration (204) defining a second minimum monitoring period (301), which comprises a plurality of slots, a second control resource set (204-1) occupying one or more symbols in one or more slots at the beginning of the second minimum monitoring period, and one or more search spaces associated with the second control resource set (204-1);
transmitting the second configuration (204) in the cell to configure the at least one wireless device in the cell for periodic downlink control channel monitoring with a second monitoring periodicity, which is M times the second minimum monitoring period, wherein M is a positive integer;
scheduling transmissions by allocating resources within the second minimum monitoring period (301) at least from one or more slots not having symbols occupied by the second control resource set (204-1); and
transmitting, according to the second configuration (204), within the one or more symbols, information indicating the resources, wherein the first control resource set (203-1) and the second control resource set (204-1) overlap at least partially in time and the at least one wireless device is further configured to perform the downlink control channel monitoring using same channel estimates or a same demodulation reference signal sequence, wherein the same demodulation reference signal sequence is transmitted when the first control resource set and the second control resource set overlap at least partially in time.

9. A network node according to claim 8, wherein the means are further configured to determine which one of the first and second configurations (203, 204) to use based on aggregation level and/or beam width used.

10. A network node according to claim 8 or claim 9, wherein the first control resource set (203-1) provides one of a single slot per transport block scheduling and a repetitive transport block scheduling, wherein in the single slot per transport block scheduling transport blocks are mapped to single transport blocks, and/or multiple transport blocks are mapped to multiple slots, and each transport block is transmitted in a single slot, and wherein in the repetitive transport block scheduling a single transport block per spatial layer is mapped to multiple slots, and one transport block is transmitted in each of the multiple slots.

11. A network node according to any of claims 8 to 10, wherein the first control resource set (203-1) provides one of a single slot per transport block scheduling and a repetitive transport block scheduling, and the second control resource set (204-1) provides another one of the single slot per transport block scheduling and the repetitive transport block scheduling, wherein in the single slot per transport block scheduling transport blocks are mapped to single transport blocks, and/or multiple transport blocks are mapped to multiple slots, and each transport block is transmitted in a single slot, and wherein in the repetitive transport block scheduling a single transport block per spatial layer is mapped to multiple slots, and one transport block is transmitted in each of the multiple slots.

12. A method for a user device, the method comprising:
receiving from a network node a first configuration (203) for physical downlink control channel monitoring, the first configuration (203) defining a first minimum monitoring period (201), which comprises a plurality of slots, a first control resource set (203-1) occupying one or more symbols in one or more slots at the beginning of the first minimum monitoring period (201), and one or more search spaces associated with the first control resource set (203-1);
performing downlink control channel monitoring periodically with a first monitoring periodicity, which is N times the first minimum monitoring period (201), wherein N is a positive integer, by monitoring according to the received first configuration the one or more symbols in the one or more slots at the beginning of a first monitoring period;
receiving a second configuration (204) for physical downlink control channel monitoring, the second configuration (204) defining a second minimum monitoring period (301), which comprises a plurality of slots, a second control resource set (204-1) occupying one or more symbols in one or more slots at the beginning of the second minimum monitoring period (301), and one or more search spaces associated with the second control resource set (204-1); and
performing downlink control channel monitoring periodically with a second monitoring periodicity, which is M times the second minimum monitoring period (301), wherein M is a positive integer, by monitoring according to the received second configuration (204) the one or more symbols in the one or more slots at the beginning of a second monitoring period, wherein the first control resource set and the second control resource set overlap at least partially in time and the means are further configured to perform the downlink control channel monitoring with the first and second monitoring periodicities and using same channel estimates or a same demodulation reference signal sequence, and wherein a search space defines one or more monitoring occasions with occurrence periodicity with respect to the corresponding minimum monitoring period (201, 301) and the occurrence periodicity defines how many minimum monitoring periods (201, 301) the corresponding monitoring period comprises.

13. A computer program product embodied on a computer-readable medium and comprising a computer program code readable by a computing device, wherein the computer program code configures the computing device to carry out a computer process comprising:
configuring the computing device with a first configuration (203) for physical downlink control channel monitoring, the first configuration _(203) defining a first minimum monitoring period (201), which comprises a plurality of slots, a first control resource set (203-1) occupying one or more symbols in one or more slots at the beginning of the first minimum monitoring period (201), and one or more search spaces associated with the first control resource set (203-1) and
performing downlink control channel monitoring periodically with a first monitoring periodicity, which is N times the first minimum monitoring period (201, 301), wherein N is a positive integer, by monitoring according to the received configuration the one or more symbols in the one or more slots at the beginning of the minimum monitoring period (201, 301);
receiving a second configuration (204) for physical downlink control channel monitoring, the second configuration (204) defining a second minimum monitoring period (301), which comprises a plurality of slots, a second control resource set (204-1) occupying one or more symbols in one or more slots at the beginning of the second minimum monitoring period (301), and one or more search spaces associated with the second control resource set (204-1); and
performing downlink control channel monitoring periodically with a second monitoring periodicity, which is M times the second minimum monitoring period (301), wherein M is a positive integer, by monitoring according to the received second configuration the one or more symbols in the one or more slots at the beginning of a second monitoring period, wherein the first control resource set (203-1) and the second control resource set (204-1) overlap at least partially in time and the means are further configured to perform the downlink control channel monitoring with the first and second monitoring periodicities and using same channel estimates or a same demodulation reference signal sequence, and wherein a search space defines one or more monitoring occasions with occurrence periodicity with respect to the corresponding minimum monitoring period (201, 301) and the occurrence periodicity defines how many minimum monitoring periods (201, 301) the corresponding monitoring period comprises.

14. A computer program product embodied on a computer-readable medium and comprising a computer program code readable by a computing device, wherein the computer program code configures the computing device to carry out a computer process comprising:
determining a first configuration (203) for physical downlink control channel monitoring, the first configuration (203) defining a first minimum monitoring period (201), which comprises a plurality of slots, a first control resource set (203-1) occupying one or more symbols in one or more slots at the beginning of the first minimum monitoring period (201), and one or more search spaces associated with the control resource set (203-1);
causing transmitting the first configuration in a cell provided by the computing device to configure at least one wireless device in the cell for periodic downlink control channel monitoring with a first monitoring periodicity, which is N times the first minimum monitoring period (201), wherein N is a positive integer;
scheduling transmissions by allocating resources within the first minimum monitoring period (201) at least from one or more slots not having symbols occupied by the first control resource set (203-1); and
causing transmitting, according to the configuration, within the one or more symbols, information indicating the resources;
determining at least one second configuration (204) for physical downlink control channel monitoring, the second configuration (204) defining a second minimum monitoring period (301), which comprises a plurality of slots, a second control resource set (204-1) occupying one or more symbols in one or more slots at the beginning of the second minimum monitoring period (301), and one or more search spaces associated with the second control resource set (204-1);
causing transmitting the second configuration (204) in the cell to configure the at least one wireless device in the cell for periodic downlink control channel monitoring with a second monitoring periodicity, which is M times the second minimum monitoring period (301), wherein M is a positive integer;
scheduling transmissions by allocating resources within the second minimum monitoring period (301) at least from one or more slots not having symbols occupied by the second control resource set (204-1); and
causing transmitting, according to the second configuration (204), within the one or more symbols, information indicating the resources, wherein the first control resource set (203-1) and the second control resource set (204-1) overlap at least partially in time and the at least one wireless device is further configured to perform the downlink control channel monitoring with the first and second monitoring periodicities and using same channel estimates or a same demodulation reference signal sequence.

## Patentansprüche

1. Benutzergerät, umfassend Mittel zum Durchführen von:
Empfangen, von einem Netzwerkknoten, einer ersten Konfiguration (203) für eine Überwachung eines physikalischen Downlink-Steuerkanals, wobei die erste Konfiguration (203) eine erste minimale Überwachungsperiode (201) definiert, die eine Vielzahl von Slots umfasst, einen ersten Steuerressourcensatz (203-1), der ein oder mehrere Symbole in einem oder mehreren Slots am Anfang der ersten minimalen Überwachungsperiode (201) belegt, und einen oder mehrere Suchräume, die dem ersten Steuerressourcensatz (203-1) zugeordnet sind;
periodisches Durchführen einer Überwachung des Downlink-Steuerkanals mit einer ersten Überwachungsperiodizität, die das N-fache der ersten minimalen Überwachungsperiode (201) beträgt, wobei N eine positive ganze Zahl ist, durch Überwachen, gemäß der empfangenen ersten Konfiguration (203), der einen oder mehreren Symbole in dem einen oder den mehreren Slots am Anfang einer ersten Überwachungsperiode;
Empfangen einer zweiten Konfiguration (204) für eine Überwachung eines physikalischen Downlink-Steuerkanals, wobei die zweite Konfiguration (204) eine zweite minimale Überwachungsperiode (301) definiert, die eine Vielzahl von Slots umfasst, einen zweiten Steuerressourcensatz (204-1), der ein oder mehrere Symbole in einem oder mehreren Slots am Anfang der zweiten minimalen Überwachungsperiode (301) belegt, und einen oder mehrere Suchräume, die dem zweiten Steuerressourcensatz (204-1) zugeordnet sind; und
periodisches Durchführen einer Überwachung des Downlink-Steuerkanals mit einer zweiten Überwachungsperiodizität, die das M-fache der zweiten minimalen Überwachungsperiode (301) beträgt, wobei M eine positive ganze Zahl ist, durch Überwachen, gemäß der empfangenen zweiten Konfiguration (204), der einen oder mehreren Symbole in dem einen oder den mehreren Slots am Anfang einer zweiten Überwachungsperiode, wobei der erste Steuerressourcensatz (203-1) und der zweite Steuerressourcensatz (204-1) sich zeitlich zumindest teilweise überlappen und die Mittel ferner dazu ausgelegt sind, die Überwachung des Downlink-Steuerkanals mit der ersten und der zweiten Überwachungsperiodizität und unter Verwendung derselben Kanalschätzungen oder derselben Demodulationsreferenzsignalsequenz durchzuführen, und wobei ein Suchraum eine oder mehrere Überwachungsgelegenheiten mit einer Auftrittsperiodizität in Bezug auf die entsprechende minimale Überwachungsperiode (201, 301) definiert und die Auftrittsperiodizität definiert, wie viele minimale Überwachungsperioden (201, 301) die entsprechende Überwachungsperiode umfasst.

2. Benutzergerät nach Anspruch 1, wobei die zweite minimale Überwachungsperiode (301) dieselbe Anzahl von Slots wie die erste minimale Überwachungsperiode (201) umfasst.

3. Benutzergerät nach Anspruch 1 oder 2, wobei der erste Steuerressourcensatz (203-1) eine andere Anzahl von Symbolen belegt als der zweite Steuerressourcensatz (204-1).

4. Benutzergerät nach einem der Ansprüche 1 bis 3, wobei die Mittel ferner dazu ausgelegt sind, die Überwachung des Downlink-Steuerkanals mit der zweiten Überwachungsperiodizität unter Verwendung derselben Demodulationsreferenzsignalsequenz durchzuführen, die für die Überwachung des Downlink-Steuerkanals mit der ersten Überwachungsperiodizität verwendet wird.

5. Benutzergerät nach einem der vorhergehenden Ansprüche, wobei die Mittel ferner dazu ausgelegt sind, Folgendes durchzuführen:
Detektieren, in den einen oder mehreren überwachten Symbolen, einer dem Benutzergerät zugewiesenen Ressource, wobei die Ressource ein oder mehrere Symbole innerhalb der entsprechenden minimalen Überwachungsperiode (201) umfasst;
Empfangen, in Reaktion darauf, dass die zugewiesene Ressource eine Downlink-Ressource ist, von Daten in der Ressource; und
Senden, in Reaktion darauf, dass die zugewiesene Ressource eine Uplink-Ressource ist, von Daten in der Ressource.

6. Benutzergerät nach Anspruch 5, wobei die Mittel ferner dazu ausgelegt sind, eine Datenzuordnung zu der Ressource auf der Grundlage von in den einen oder mehreren überwachten Symbolen empfangenen Informationen und auf der Grundlage der Größe des entsprechenden Steuerressourcensatzes (203-1, 204-1) durchzuführen.

7. Benutzergerät nach einem der vorhergehenden Ansprüche, wobei in der empfangenen Konfiguration auf den einen oder die mehreren Slots am Anfang der entsprechenden minimalen Überwachungsperiode (201, 301) ein oder mehrere Slots folgen, die in der entsprechenden minimalen Überwachungsperiode (201, 301) nicht von dem Steuerressourcensatz belegt sind.

8. Netzwerkknoten, umfassend Mittel zum Durchführen von:
Bestimmen einer ersten Konfiguration (203) für eine Überwachung eines physikalischen Downlink-Steuerkanals, wobei die erste Konfiguration eine erste minimale Überwachungsperiode (201) definiert, die eine Vielzahl von Slots umfasst, einen ersten Steuerressourcensatz (203-1), der ein oder mehrere Symbole in einem oder mehreren Slots am Anfang der ersten minimalen Überwachungsperiode (201) belegt, und einen oder mehrere Suchräume, die dem Steuerressourcensatz (203-1) zugeordnet sind;
Senden der ersten Konfiguration in einer von dem Netzwerkknoten bereitgestellten Zelle, um mindestens ein Drahtlosgerät in der Zelle für eine periodische Überwachung des Downlink-Steuerkanals mit einer ersten Überwachungsperiodizität zu konfigurieren, die das N-fache der ersten minimalen Überwachungsperiode beträgt, wobei N eine positive ganze Zahl ist;
Planen von Übertragungen durch Zuweisen von Ressourcen innerhalb der ersten minimalen Überwachungsperiode zumindest aus einem oder mehreren Slots, die keine von dem ersten Steuerressourcensatz (203-1) belegten Symbole aufweisen;
Senden, gemäß der ersten Konfiguration (203), innerhalb der einen oder mehreren Symbole, von Informationen, die die Ressourcen angeben;
Bestimmen mindestens einer zweiten Konfiguration (204) für eine Überwachung eines physikalischen Downlink-Steuerkanals, wobei die zweite Konfiguration (204) eine zweite minimale Überwachungsperiode (301) definiert, die eine Vielzahl von Slots umfasst, einen zweiten Steuerressourcensatz (204-1), der ein oder mehrere Symbole in einem oder mehreren Slots am Anfang der zweiten minimalen Überwachungsperiode belegt, und einen oder mehrere Suchräume, die dem zweiten Steuerressourcensatz (204-1) zugeordnet sind;
Senden der zweiten Konfiguration (204) in der Zelle, um das mindestens eine Drahtlosgerät in der Zelle für eine periodische Überwachung des Downlink-Steuerkanals mit einer zweiten Überwachungsperiodizität zu konfigurieren, die das M-fache der zweiten minimalen Überwachungsperiode beträgt, wobei M eine positive ganze Zahl ist;
Planen von Übertragungen durch Zuweisen von Ressourcen innerhalb der zweiten minimalen Überwachungsperiode (301) zumindest aus einem oder mehreren Slots, die keine von dem zweiten Steuerressourcensatz (204-1) belegten Symbole aufweisen; und
Senden, gemäß der zweiten Konfiguration (204), innerhalb der einen oder mehreren Symbole, von Informationen, die die Ressourcen angeben, wobei der erste Steuerressourcensatz (203-1) und der zweite Steuerressourcensatz (204-1) sich zeitlich zumindest teilweise überlappen und das mindestens eine Drahtlosgerät ferner dazu ausgelegt ist, die Überwachung des Downlink-Steuerkanals unter Verwendung derselben Kanalschätzungen oder derselben Demodulationsreferenzsignalsequenz durchzuführen, wobei die gleiche Demodulationsreferenzsignalsequenz gesendet wird, wenn der erste Steuerressourcensatz und der zweite Steuerressourcensatz sich zeitlich zumindest teilweise überlappen.

9. Netzwerkknoten nach Anspruch 8, wobei die Mittel ferner dazu ausgelegt sind, auf der Grundlage einer verwendeten Aggregationsstufe und/oder Strahlbreite zu bestimmen, welche der ersten und zweiten Konfigurationen (203, 204) zu verwenden ist.

10. Netzwerkknoten nach Anspruch 8 oder Anspruch 9, wobei der erste Steuerressourcensatz (203-1) eines von einer Einzelslot-pro-Transportblock-Planung und einer repetitiven Transportblock-Planung bereitstellt, wobei bei der Einzelslot-pro-Transportblock-Planung Transportblöcke einzelnen Transportblöcken zugeordnet werden und/oder mehrere Transportblöcke mehreren Slots zugeordnet werden und jeder Transportblock in einem einzelnen Slot gesendet wird, und wobei bei der repetitiven Transportblock-Planung ein einzelner Transportblock pro räumlicher Schicht mehreren Slots zugeordnet wird und ein Transportblock in jedem der mehreren Slots gesendet wird.

11. Netzwerkknoten nach einem der Ansprüche 8 bis 10, wobei der erste Steuerressourcensatz (203-1) eines von einer Einzelslot-pro-Transportblock-Planung und einer repetitiven Transportblock-Planung bereitstellt und der zweite Steuerressourcensatz (204-1) ein anderes von der Einzelslot-pro-Transportblock-Planung und der repetitiven Transportblock-Planung bereitstellt, wobei bei der Einzelslot-pro-Transportblock-Planung Transportblöcke einzelnen Transportblöcken zugeordnet werden und/oder mehrere Transportblöcke mehreren Slots zugeordnet werden und jeder Transportblock in einem einzelnen Slot gesendet wird, und wobei bei der repetitiven Transportblock-Planung ein einzelner Transportblock pro räumlicher Schicht mehreren Slots zugeordnet wird und ein Transportblock in jedem der mehreren Slots gesendet wird.

12. Verfahren für ein Benutzergerät, wobei das Verfahren umfasst:
Empfangen, von einem Netzwerkknoten, einer ersten Konfiguration (203) für eine Überwachung eines physikalischen Downlink-Steuerkanals, wobei die erste Konfiguration (203) eine erste minimale Überwachungsperiode (201) definiert, die eine Vielzahl von Slots umfasst, einen ersten Steuerressourcensatz (203-1), der ein oder mehrere Symbole in einem oder mehreren Slots am Anfang der ersten minimalen Überwachungsperiode (201) belegt, und einen oder mehrere Suchräume, die dem ersten Steuerressourcensatz (203-1) zugeordnet sind;
periodisches Durchführen einer Überwachung des Downlink-Steuerkanals mit einer ersten Überwachungsperiodizität, die das N-fache der ersten minimalen Überwachungsperiode (201) beträgt, wobei N eine positive ganze Zahl ist, durch Überwachen, gemäß der empfangenen ersten Konfiguration, der einen oder mehreren Symbole in dem einen oder den mehreren Slots am Anfang einer ersten Überwachungsperiode;
Empfangen einer zweiten Konfiguration (204) für eine Überwachung eines physikalischen Downlink-Steuerkanals, wobei die zweite Konfiguration (204) eine zweite minimale Überwachungsperiode (301) definiert, die eine Vielzahl von Slots umfasst, einen zweiten Steuerressourcensatz (204-1), der ein oder mehrere Symbole in einem oder mehreren Slots am Anfang der zweiten minimalen Überwachungsperiode (301) belegt, und einen oder mehrere Suchräume, die dem zweiten Steuerressourcensatz (204-1) zugeordnet sind; und
periodisches Durchführen einer Überwachung des Downlink-Steuerkanals mit einer zweiten Überwachungsperiodizität, die das M-fache der zweiten minimalen Überwachungsperiode (301) beträgt, wobei M eine positive ganze Zahl ist, durch Überwachen, gemäß der empfangenen zweiten Konfiguration (204), der einen oder mehreren Symbole in dem einen oder den mehreren Slots am Anfang einer zweiten Überwachungsperiode, wobei der erste Steuerressourcensatz und der zweite Steuerressourcensatz sich zeitlich zumindest teilweise überlappen und die Mittel ferner dazu ausgelegt sind, die Überwachung des Downlink-Steuerkanals mit der ersten und der zweiten Überwachungsperiodizität und unter Verwendung derselben Kanalschätzungen oder derselben Demodulationsreferenzsignalsequenz durchzuführen, und wobei ein Suchraum eine oder mehrere Überwachungsgelegenheiten mit einer Auftrittsperiodizität in Bezug auf die entsprechende minimale Überwachungsperiode (201, 301) definiert und die Auftrittsperiodizität definiert, wie viele minimale Überwachungsperioden (201, 301) die entsprechende Überwachungsperiode umfasst.

13. Computerprogrammprodukt, das auf einem computerlesbaren Medium verkörpert ist und einen von einer Rechenvorrichtung lesbaren Computerprogrammcode umfasst, wobei der Computerprogrammcode die Rechenvorrichtung dazu konfiguriert, einen Rechenprozess auszuführen, der Folgendes umfasst:
Konfigurieren der Rechenvorrichtung mit einer ersten Konfiguration (203) für eine Überwachung eines physikalischen Downlink-Steuerkanals, wobei die erste Konfiguration (203) eine erste minimale Überwachungsperiode (201) definiert, die eine Vielzahl von Slots umfasst, einen ersten Steuerressourcensatz (203-1), der ein oder mehrere Symbole in einem oder mehreren Slots am Anfang der ersten minimalen Überwachungsperiode (201) belegt, und einen oder mehrere Suchräume, die dem ersten Steuerressourcensatz (203-1) zugeordnet sind, und
periodisches Durchführen einer Überwachung des Downlink-Steuerkanals mit einer ersten Überwachungsperiodizität, die das N-fache der ersten minimalen Überwachungsperiode (201, 301) beträgt, wobei N eine positive ganze Zahl ist, durch Überwachen, gemäß der empfangenen Konfiguration, der einen oder mehreren Symbole in dem einen oder den mehreren Slots am Anfang der minimalen Überwachungsperiode (201, 301);
Empfangen einer zweiten Konfiguration (204) für eine Überwachung eines physikalischen Downlink-Steuerkanals, wobei die zweite Konfiguration (204) eine zweite minimale Überwachungsperiode (301) definiert, die eine Vielzahl von Slots umfasst, einen zweiten Steuerressourcensatz (204-1), der ein oder mehrere Symbole in einem oder mehreren Slots am Anfang der zweiten minimalen Überwachungsperiode (301) belegt, und einen oder mehrere Suchräume, die dem zweiten Steuerressourcensatz (204-1) zugeordnet sind; und
periodisches Durchführen einer Überwachung des Downlink-Steuerkanals mit einer zweiten Überwachungsperiodizität, die das M-fache der zweiten minimalen Überwachungsperiode (301) beträgt, wobei M eine positive ganze Zahl ist, durch Überwachen, gemäß der empfangenen zweiten Konfiguration, der einen oder mehreren Symbole in dem einen oder den mehreren Slots am Anfang einer zweiten Überwachungsperiode, wobei der erste Steuerressourcensatz (203-1) und der zweite Steuerressourcensatz (204-1) sich zeitlich zumindest teilweise überlappen und die Mittel ferner dazu ausgelegt sind, die Überwachung des Downlink-Steuerkanals mit der ersten und der zweiten Überwachungsperiodizität und unter Verwendung derselben Kanalschätzungen oder derselben Demodulationsreferenzsignalsequenz durchzuführen, und wobei ein Suchraum eine oder mehrere Überwachungsgelegenheiten mit einer Auftrittsperiodizität in Bezug auf die entsprechende minimale Überwachungsperiode (201, 301) definiert und die Auftrittsperiodizität definiert, wie viele minimale Überwachungsperioden (201, 301) die entsprechende Überwachungsperiode umfasst.

14. Computerprogrammprodukt, das auf einem computerlesbaren Medium verkörpert ist und einen von einer Rechenvorrichtung lesbaren Computerprogrammcode umfasst, wobei der Computerprogrammcode die Rechenvorrichtung dazu konfiguriert, einen Rechenprozess auszuführen, der Folgendes umfasst:
Bestimmen einer ersten Konfiguration (203) für eine Überwachung eines physikalischen Downlink-Steuerkanals, wobei die erste Konfiguration (203) eine erste minimale Überwachungsperiode (201) definiert, die eine Vielzahl von Slots umfasst, einen ersten Steuerressourcensatz (203-1), der ein oder mehrere Symbole in einem oder mehreren Slots am Anfang der ersten minimalen Überwachungsperiode (201) belegt, und einen oder mehrere Suchräume, die dem Steuerressourcensatz (203-1) zugeordnet sind;
Veranlassen des Sendens der ersten Konfiguration in einer von der Rechenvorrichtung bereitgestellten Zelle, um mindestens ein Drahtlosgerät in der Zelle für eine periodische Überwachung des Downlink-Steuerkanals mit einer ersten Überwachungsperiodizität zu konfigurieren, die das N-fache der ersten minimalen Überwachungsperiode (201) beträgt, wobei N eine positive ganze Zahl ist;
Planen von Übertragungen durch Zuweisen von Ressourcen innerhalb der ersten minimalen Überwachungsperiode (201) zumindest aus einem oder mehreren Slots, die keine von dem ersten Steuerressourcensatz (203-1) belegten Symbole aufweisen; und
Veranlassen des Sendens, gemäß der Konfiguration, innerhalb der einen oder mehreren Symbole, von Informationen, die die Ressourcen angeben;
Bestimmen mindestens einer zweiten Konfiguration (204) für eine Überwachung eines physikalischen Downlink-Steuerkanals, wobei die zweite Konfiguration (204) eine zweite minimale Überwachungsperiode (301) definiert, die eine Vielzahl von Slots umfasst, einen zweiten Steuerressourcensatz (204-1), der ein oder mehrere Symbole in einem oder mehreren Slots am Anfang der zweiten minimalen Überwachungsperiode (301) belegt, und einen oder mehrere Suchräume, die dem zweiten Steuerressourcensatz (204-1) zugeordnet sind;
Veranlassen des Sendens der zweiten Konfiguration (204) in der Zelle, um das mindestens eine Drahtlosgerät in der Zelle für eine periodische Überwachung des Downlink-Steuerkanals mit einer zweiten Überwachungsperiodizität zu konfigurieren, die das M-fache der zweiten minimalen Überwachungsperiode (301) beträgt, wobei M eine positive ganze Zahl ist;
Planen von Übertragungen durch Zuweisen von Ressourcen innerhalb der zweiten minimalen Überwachungsperiode (301) zumindest aus einem oder mehreren Slots, die keine von dem zweiten Steuerressourcensatz (204-1) belegten Symbole aufweisen; und
Veranlassen des Sendens, gemäß der zweiten Konfiguration (204), innerhalb der einen oder mehreren Symbole, von Informationen, die die Ressourcen angeben, wobei der erste Steuerressourcensatz (203-1) und der zweite Steuerressourcensatz (204-1) sich zeitlich zumindest teilweise überlappen und das mindestens eine Drahtlosgerät ferner dazu ausgelegt ist, die Überwachung des Downlink-Steuerkanals mit der ersten und der zweiten Überwachungsperiodizität und unter Verwendung derselben Kanalschätzungen oder derselben Demodulationsreferenzsignalsequenz durchzuführen.

## Revendications

1. Dispositif utilisateur, comprenant des moyens pour effectuer :
la réception, en provenance d'un nœud de réseau, d'une première configuration (203) pour la surveillance de canal physique de commande de liaison descendante, la première configuration (203) définissant une première période de surveillance minimale (201), qui comprend une pluralité de créneaux, un premier ensemble de ressources de commande (203-1) occupant un ou plusieurs symboles dans un ou plusieurs créneaux au début de la première période de surveillance minimale (201), et un ou plusieurs espaces de recherche associés au premier ensemble de ressources de commande (203-1) ;
la réalisation d'une surveillance de canal de commande de liaison descendante périodiquement avec une première périodicité de surveillance, qui est N fois la première période de surveillance minimale (201), N étant un entier positif, en surveillant selon la première configuration reçue (203) les un ou plusieurs symboles dans les un ou plusieurs créneaux au début d'une première période de surveillance ;
la réception d'une deuxième configuration (204) pour la surveillance de canal physique de commande de liaison descendante, la deuxième configuration (204) définissant une deuxième période de surveillance minimale (301), qui comprend une pluralité de créneaux, un deuxième ensemble de ressources de commande (204-1) occupant un ou plusieurs symboles dans un ou plusieurs créneaux au début de la deuxième période de surveillance minimale (301), et un ou plusieurs espaces de recherche associés au deuxième ensemble de ressources de commande (204-1) ; et
la réalisation d'une surveillance de canal de commande de liaison descendante périodiquement avec une deuxième périodicité de surveillance, qui est M fois la deuxième période de surveillance minimale (301), M étant un entier positif, en surveillant selon la deuxième configuration reçue (204) les un ou plusieurs symboles dans les un ou plusieurs créneaux au début d'une deuxième période de surveillance, dans lequel le premier ensemble de ressources de commande (203-1) et le deuxième ensemble de ressources de commande (204-1) se chevauchent au moins partiellement dans le temps et les moyens sont en outre configurés pour effectuer la surveillance de canal de commande de liaison descendante avec les première et deuxième périodicités de surveillance et en utilisant des mêmes estimations de canal ou une même séquence de signal de référence de démodulation, et dans lequel un espace de recherche définit une ou plusieurs occasions de surveillance avec une périodicité d'occurrence par rapport à la période de surveillance minimale correspondante (201, 301) et la périodicité d'occurrence définit combien de périodes de surveillance minimales (201, 301) comprend la période de surveillance correspondante.

2. Dispositif utilisateur selon la revendication 1, dans lequel la deuxième période de surveillance minimale (301) comprend la même quantité de créneaux que la première période de surveillance minimale (201).

3. Dispositif utilisateur selon la revendication 1 ou 2, dans lequel le premier ensemble de ressources de commande (203-1) occupe un nombre de symboles différent de celui du deuxième ensemble de ressources de commande (204-1).

4. Dispositif utilisateur selon l'une quelconque des revendications 1 à 3, dans lequel les moyens sont en outre configurés pour effectuer la surveillance de canal de commande de liaison descendante avec la deuxième périodicité de surveillance en utilisant une même séquence de signal de référence de démodulation, qui est utilisée pour la surveillance de canal de commande de liaison descendante avec la première périodicité de surveillance.

5. Dispositif utilisateur selon l'une quelconque des revendications précédentes, dans lequel les moyens sont en outre configurés pour effectuer :
la détection, dans les un ou plusieurs symboles surveillés, d'une ressource allouée au dispositif utilisateur, la ressource comprenant un ou plusieurs symboles dans la période de surveillance minimale correspondante (201) ;
la réception, en réponse au fait que la ressource allouée est une ressource de liaison descendante, de données dans la ressource ; et
la transmission, en réponse au fait que la ressource allouée est une ressource de liaison montante, de données dans la ressource.

6. Dispositif utilisateur selon la revendication 5, dans lequel les moyens sont en outre configurés pour effectuer une mise en correspondance de données avec la ressource sur la base d'informations reçues dans les un ou plusieurs symboles surveillés, et sur la base de la taille de l'ensemble de ressources de commande correspondant (203-1, 204-1).

7. Dispositif utilisateur selon l'une quelconque des revendications précédentes, dans lequel, dans la configuration reçue, les un ou plusieurs créneaux au début de la période de surveillance minimale correspondante (201, 301) sont suivis d'un ou plusieurs créneaux non occupés par l'ensemble de ressources de commande dans la période de surveillance minimale correspondante (201, 301).

8. Nœud de réseau, comprenant des moyens pour effectuer :
la détermination d'une première configuration (203) pour la surveillance de canal physique de commande de liaison descendante, la première configuration définissant une première période de surveillance minimale (201), qui comprend une pluralité de créneaux, un premier ensemble de ressources de commande (203-1) occupant un ou plusieurs symboles dans un ou plusieurs créneaux au début de la première période de surveillance minimale (201), et un ou plusieurs espaces de recherche associés à l'ensemble de ressources de commande (203-1) ;
la transmission de la première configuration dans une cellule fournie par le nœud de réseau pour configurer au moins un dispositif sans fil dans la cellule pour une surveillance de canal de commande de liaison descendante périodique avec une première périodicité de surveillance, qui est N fois la première période de surveillance minimale, N étant un entier positif ;
l'ordonnancement de transmissions en allouant des ressources dans la première période de surveillance minimale au moins à partir d'un ou plusieurs créneaux n'ayant pas de symboles occupés par le premier ensemble de ressources de commande (203-1) ;
la transmission, selon la première configuration (203), dans les un ou plusieurs symboles, d'informations indiquant les ressources ;
la détermination d'au moins une deuxième configuration (204) pour la surveillance de canal physique de commande de liaison descendante, la deuxième configuration (204) définissant une deuxième période de surveillance minimale (301), qui comprend une pluralité de créneaux, un deuxième ensemble de ressources de commande (204-1) occupant un ou plusieurs symboles dans un ou plusieurs créneaux au début de la deuxième période de surveillance minimale, et un ou plusieurs espaces de recherche associés au deuxième ensemble de ressources de commande (204-1) ;
la transmission de la deuxième configuration (204) dans la cellule pour configurer l'au moins un dispositif sans fil dans la cellule pour une surveillance de canal de commande de liaison descendante périodique avec une deuxième périodicité de surveillance, qui est M fois la deuxième période de surveillance minimale, M étant un entier positif ;
l'ordonnancement de transmissions en allouant des ressources dans la deuxième période de surveillance minimale (301) au moins à partir d'un ou plusieurs créneaux n'ayant pas de symboles occupés par le deuxième ensemble de ressources de commande (204-1) ; et
la transmission, selon la deuxième configuration (204), dans les un ou plusieurs symboles, d'informations indiquant les ressources, dans lequel le premier ensemble de ressources de commande (203-1) et le deuxième ensemble de ressources de commande (204-1) se chevauchent au moins partiellement dans le temps et l'au moins un dispositif sans fil est en outre configuré pour effectuer la surveillance de canal de commande de liaison descendante en utilisant des mêmes estimations de canal ou une même séquence de signal de référence de démodulation, dans lequel la même séquence de signal de référence de démodulation est transmise lorsque le premier ensemble de ressources de commande et le deuxième ensemble de ressources de commande se chevauchent au moins partiellement dans le temps.

9. Nœud de réseau selon la revendication 8, dans lequel les moyens sont en outre configurés pour déterminer laquelle des première et deuxième configurations (203, 204) utiliser sur la base d'un niveau d'agrégation et/ou d'une largeur de faisceau utilisée.

10. Nœud de réseau selon la revendication 8 ou la revendication 9, dans lequel le premier ensemble de ressources de commande (203-1) fournit l'un parmi un ordonnancement à un seul créneau par bloc de transport et un ordonnancement à bloc de transport répétitif, dans lequel, dans l'ordonnancement à un seul créneau par bloc de transport, des blocs de transport sont mis en correspondance avec des blocs de transport uniques, et/ou de multiples blocs de transport sont mis en correspondance avec de multiples créneaux, et chaque bloc de transport est transmis dans un seul créneau, et dans lequel, dans l'ordonnancement à bloc de transport répétitif, un seul bloc de transport par couche spatiale est mis en correspondance avec de multiples créneaux, et un bloc de transport est transmis dans chacun des multiples créneaux.

11. Nœud de réseau selon l'une quelconque des revendications 8 à 10, dans lequel le premier ensemble de ressources de commande (203-1) fournit l'un parmi un ordonnancement à un seul créneau par bloc de transport et un ordonnancement à bloc de transport répétitif, et le deuxième ensemble de ressources de commande (204-1) fournit l'autre parmi l'ordonnancement à un seul créneau par bloc de transport et l'ordonnancement à bloc de transport répétitif, dans lequel, dans l'ordonnancement à un seul créneau par bloc de transport, des blocs de transport sont mis en correspondance avec des blocs de transport uniques, et/ou de multiples blocs de transport sont mis en correspondance avec de multiples créneaux, et chaque bloc de transport est transmis dans un seul créneau, et dans lequel, dans l'ordonnancement à bloc de transport répétitif, un seul bloc de transport par couche spatiale est mis en correspondance avec de multiples créneaux, et un bloc de transport est transmis dans chacun des multiples créneaux.

12. Procédé pour un dispositif utilisateur, le procédé comprenant :
la réception, en provenance d'un nœud de réseau, d'une première configuration (203) pour la surveillance de canal physique de commande de liaison descendante, la première configuration (203) définissant une première période de surveillance minimale (201), qui comprend une pluralité de créneaux, un premier ensemble de ressources de commande (203-1) occupant un ou plusieurs symboles dans un ou plusieurs créneaux au début de la première période de surveillance minimale (201), et un ou plusieurs espaces de recherche associés au premier ensemble de ressources de commande (203-1) ;
la réalisation d'une surveillance de canal de commande de liaison descendante périodiquement avec une première périodicité de surveillance, qui est N fois la première période de surveillance minimale (201), N étant un entier positif, en surveillant selon la première configuration reçue les un ou plusieurs symboles dans les un ou plusieurs créneaux au début d'une première période de surveillance ;
la réception d'une deuxième configuration (204) pour la surveillance de canal physique de commande de liaison descendante, la deuxième configuration (204) définissant une deuxième période de surveillance minimale (301), qui comprend une pluralité de créneaux, un deuxième ensemble de ressources de commande (204-1) occupant un ou plusieurs symboles dans un ou plusieurs créneaux au début de la deuxième période de surveillance minimale (301), et un ou plusieurs espaces de recherche associés au deuxième ensemble de ressources de commande (204-1) ; et
la réalisation d'une surveillance de canal de commande de liaison descendante périodiquement avec une deuxième périodicité de surveillance, qui est M fois la deuxième période de surveillance minimale (301), M étant un entier positif, en surveillant selon la deuxième configuration reçue (204) les un ou plusieurs symboles dans les un ou plusieurs créneaux au début d'une deuxième période de surveillance, dans lequel le premier ensemble de ressources de commande et le deuxième ensemble de ressources de commande se chevauchent au moins partiellement dans le temps et les moyens sont en outre configurés pour effectuer la surveillance de canal de commande de liaison descendante avec les première et deuxième périodicités de surveillance et en utilisant des mêmes estimations de canal ou une même séquence de signal de référence de démodulation, et dans lequel un espace de recherche définit une ou plusieurs occasions de surveillance avec une périodicité d'occurrence par rapport à la période de surveillance minimale correspondante (201, 301) et la périodicité d'occurrence définit combien de périodes de surveillance minimales (201, 301) comprend la période de surveillance correspondante.

13. Produit-programme d'ordinateur mis en œuvre sur un support lisible par ordinateur et comprenant un code de programme informatique lisible par un dispositif informatique, dans lequel le code de programme informatique configure le dispositif informatique pour exécuter un processus informatique comprenant :
la configuration du dispositif informatique avec une première configuration (203) pour la surveillance de canal physique de commande de liaison descendante, la première configuration (203) définissant une première période de surveillance minimale (201), qui comprend une pluralité de créneaux, un premier ensemble de ressources de commande (203-1) occupant un ou plusieurs symboles dans un ou plusieurs créneaux au début de la première période de surveillance minimale (201), et un ou plusieurs espaces de recherche associés au premier ensemble de ressources de commande (203-1) et
la réalisation d'une surveillance de canal de commande de liaison descendante périodiquement avec une première périodicité de surveillance, qui est N fois la première période de surveillance minimale (201, 301), N étant un entier positif, en surveillant selon la configuration reçue les un ou plusieurs symboles dans les un ou plusieurs créneaux au début de la période de surveillance minimale (201, 301) ;
la réception d'une deuxième configuration (204) pour la surveillance de canal physique de commande de liaison descendante, la deuxième configuration (204) définissant une deuxième période de surveillance minimale (301), qui comprend une pluralité de créneaux, un deuxième ensemble de ressources de commande (204-1) occupant un ou plusieurs symboles dans un ou plusieurs créneaux au début de la deuxième période de surveillance minimale (301), et un ou plusieurs espaces de recherche associés au deuxième ensemble de ressources de commande (204-1) ; et
la réalisation d'une surveillance de canal de commande de liaison descendante périodiquement avec une deuxième périodicité de surveillance, qui est M fois la deuxième période de surveillance minimale (301), M étant un entier positif, en surveillant selon la deuxième configuration reçue les un ou plusieurs symboles dans les un ou plusieurs créneaux au début d'une deuxième période de surveillance, dans lequel le premier ensemble de ressources de commande (203-1) et le deuxième ensemble de ressources de commande (204-1) se chevauchent au moins partiellement dans le temps et les moyens sont en outre configurés pour effectuer la surveillance de canal de commande de liaison descendante avec les première et deuxième périodicités de surveillance et en utilisant des mêmes estimations de canal ou une même séquence de signal de référence de démodulation, et dans lequel un espace de recherche définit une ou plusieurs occasions de surveillance avec une périodicité d'occurrence par rapport à la période de surveillance minimale correspondante (201, 301) et la périodicité d'occurrence définit combien de périodes de surveillance minimales (201, 301) comprend la période de surveillance correspondante.

14. Produit-programme d'ordinateur mis en œuvre sur un support lisible par ordinateur et comprenant un code de programme informatique lisible par un dispositif informatique, dans lequel le code de programme informatique configure le dispositif informatique pour exécuter un processus informatique comprenant :
la détermination d'une première configuration (203) pour la surveillance de canal physique de commande de liaison descendante, la première configuration (203) définissant une première période de surveillance minimale (201), qui comprend une pluralité de créneaux, un premier ensemble de ressources de commande (203-1) occupant un ou plusieurs symboles dans un ou plusieurs créneaux au début de la première période de surveillance minimale (201), et un ou plusieurs espaces de recherche associés à l'ensemble de ressources de commande (203-1) ;
le fait de provoquer la transmission de la première configuration dans une cellule fournie par le dispositif informatique pour configurer au moins un dispositif sans fil dans la cellule pour une surveillance de canal de commande de liaison descendante périodique avec une première périodicité de surveillance, qui est N fois la première période de surveillance minimale (201), N étant un entier positif ;
l'ordonnancement de transmissions en allouant des ressources dans la première période de surveillance minimale (201) au moins à partir d'un ou plusieurs créneaux n'ayant pas de symboles occupés par le premier ensemble de ressources de commande (203-1) ; et
le fait de provoquer la transmission, selon la configuration, dans les un ou plusieurs symboles, d'informations indiquant les ressources ;
la détermination d'au moins une deuxième configuration (204) pour la surveillance de canal physique de commande de liaison descendante, la deuxième configuration (204) définissant une deuxième période de surveillance minimale (301), qui comprend une pluralité de créneaux, un deuxième ensemble de ressources de commande (204-1) occupant un ou plusieurs symboles dans un ou plusieurs créneaux au début de la deuxième période de surveillance minimale (301), et un ou plusieurs espaces de recherche associés au deuxième ensemble de ressources de commande (204-1) ;
le fait de provoquer la transmission de la deuxième configuration (204) dans la cellule pour configurer l'au moins un dispositif sans fil dans la cellule pour une surveillance de canal de commande de liaison descendante périodique avec une deuxième périodicité de surveillance, qui est M fois la deuxième période de surveillance minimale (301), M étant un entier positif ;
l'ordonnancement de transmissions en allouant des ressources dans la deuxième période de surveillance minimale (301) au moins à partir d'un ou plusieurs créneaux n'ayant pas de symboles occupés par le deuxième ensemble de ressources de commande (204-1) ; et
le fait de provoquer la transmission, selon la deuxième configuration (204), dans les un ou plusieurs symboles, d'informations indiquant les ressources, dans lequel le premier ensemble de ressources de commande (203-1) et le deuxième ensemble de ressources de commande (204-1) se chevauchent au moins partiellement dans le temps et l'au moins un dispositif sans fil est en outre configuré pour effectuer la surveillance de canal de commande de liaison descendante avec les première et deuxième périodicités de surveillance et en utilisant des mêmes estimations de canal ou une même séquence de signal de référence de démodulation.
